# EUROPEAN PATENT APPLICATION

(11) **EP 3 960 804 A1**
(43) Date of publication of application: **02.03.2022**
(21) Application number: 20795980.0
(22) Date of filing: 22.04.2020
(51) Int. Cl.: C08K 5/14, C08K 5/19, C08L 21/00, C08K 3/22

(54) **RUBBER COMPOSITION, CROSSLINKED RUBBER PRODUCT OBTAINED FROM SAID RUBBER COMPOSITION, AND METHOD FOR PRODUCING SAID RUBBER COMPOSITION**

(30) Priority: 26.04.2019 JP 2019086701
(71) Applicant: BRIDGESTONE CORPORATION, Chuo-ku Tokyo 104-8340 (JP)
(72) Inventor: OISHI, Shigeki, Tokyo 104-8340 (JP)
(74) Representative: Oxley, Robin John George
(86) International application number: PCT/JP2020/017367
(87) International publication number: WO 2020/218358

(57) **Abstract**

The present invention relates to a rubber composition containing a rubber component, a eutectic compound, metal oxide, and a peroxide-based crosslinking agent, and a production method thereof. The rubber composition in which the blending amount of metal oxide such as zinc oxide is largely reduced is obtained, which may have the same vulcanization characteristics and vulcanized-rubber physical properties as those of a rubber composition in which a large amount of metal oxide is blended, while considering the environment.

## Description

### Technical Field

The present invention relates to a rubber composition containing a eutectic compound, metal oxide, and a peroxide-based crosslinking agent.

### Background Art

Zinc oxide is generally used for organic peroxide-vulcanization of rubber, typically in combination with stearic acid.

It may be thought that zinc species and/or zinc oxide act as an activator for crosslinking of organic peroxide.

It may be also thought that zinc oxide and stearic acid form, *in situ,* zinc species, and in combination with zinc oxide, the rate and quality of a crosslinking process of organic peroxide are impacted.

Meanwhile, when the blending amount of zinc oxide is reduced, the crosslinking density of a vulcanized rubber composition is lowered. Thus, there is a problem in that a tensile stress at each stretching or a maximum torque Fmax of a vulcanization curve in a vulcanization tester is lowered. For this reason, in a conventional rubber composition, blending 3 to 10 parts by mass of metal oxide such as zinc oxide with respect to 100 parts by mass of a rubber component is considered to be preferable.

As zinc oxide, nano zinc oxide having a BET surface area greater than 10 m²/g has also been proposed. It has been suggested that the use of nano zinc oxide can ultimately provide an improved process that requires a less load of zinc oxide or other zinc species.

### Summary of Invention

### Technical Problem

However, the use of nano zinc oxide presents some difficulties, including poor dispersion within a rubber composition due to particle agglutination.

Further, in the blending of metal oxide such as zinc oxide in the rubber composition, an attempt to suppress the use of metal oxide (particularly, a zinc compound) has been made in consideration of environment, due to waste containing zinc.

An object of the present invention is to obtain a rubber composition having a largely reduced blending amount of metal oxide such as zinc oxide, which may have the same vulcanization characteristics and vulcanized-rubber physical properties as those of a rubber composition in which a large amount of metal oxide is blended, while considering the environment.

### Solution to Problem

The present invention is
[1] A rubber composition containing a rubber component, a eutectic compound, metal oxide, and a peroxide-based crosslinking agent,
[2] The rubber composition described in [1], in which the eutectic compound is a mixed product of an onium salt and a hydrogen bond donor,
[3] The rubber composition described in [2], in which the onium salt is at least one selected from the group consisting of an ammonium salt, a sulfonium salt and a phosphonium salt,
[4] The rubber composition described in [3], in which the ammonium salt is a quaternary ammonium salt,
[5] The rubber composition described in [4], in which the quaternary ammonium salt is choline chloride,
[6] The rubber composition described in any one of [2] to [5], in which the hydrogen bond donor is at least one selected from a urea derivative and alkylene glycol,
[7] The rubber composition described in [6], in which the urea derivative is urea,
[8] The rubber composition described in any one of [1] to [7], in which the metal oxide is zinc oxide,
[9] The rubber composition described in [8], in which a content of the zinc oxide is 2 parts by mass or less relative to 100 parts by mass of the rubber component,
[10] The rubber composition described in any one of [1] to [9], in which a mass ratio (parts by mass of the metal oxide/ parts by mass of the peroxide-based crosslinking agent) is 0.05 to 0.6,
[11] The rubber composition described in any one of [1] to [10], in which the rubber component includes at least one selected from the group consisting of ethylene-propylene copolymer rubber (EPM), ethylene-propylene-diene terpolymer rubber (EPDM), butyl rubber, acrylic rubber, fluoro rubber, chlorosulfonated polyethylene, urethane rubber, halogenated butyl rubber, styrene-butadiene copolymer rubber, styrene-isoprene copolymer rubber, styrene-isoprene-butadiene terpolymer rubber, isoprene-butadiene copolymer rubber, ethylene-propylene-diene terpolymer rubber, natural rubber, synthetic polyisoprene rubber, polybutadiene rubber, isobutylene-isoprene copolymer rubber, and neoprene rubber.
[12] The rubber composition described in any one of [1] to [11], in which the rubber component includes at least one selected from the group consisting of ethylene-propylene copolymer rubber (EPM), ethylene-propylene-diene terpolymer rubber (EPDM), butyl rubber, acrylic rubber, fluoro rubber, chlorosulfonated polyethylene, urethane rubber, and halogenated butyl rubber,
[13] The rubber composition described in [11] or [12], in which the rubber component includes at least one selected from the group consisting of ethylene-propylene copolymer rubber (EPM) and ethylene-propylene-diene terpolymer rubber (EPDM),
[14] A crosslinked rubber product obtained by using the rubber composition described in any one of [1] to [13],
[15] The crosslinked rubber product described in [14], in which the crosslinked rubber product is at least one selected from the group consisting of a tire, an anti-vibration rubber, a seismic isolation rubber, a conveyor belt, a hose, and a crawler,
[16] A method of producing a rubber composition, the rubber composition production method including:
   (i) a process (A) of producing a masterbatch by kneading a rubber component, a eutectic compound, and metal oxide; and
   (ii) a process (B) of producing the rubber composition by kneading the masterbatch, and a peroxide-based crosslinking agent,
[17] The rubber composition production method described in [16], in which the eutectic compound is produced by mixing an onium salt and a hydrogen bond donor,
[18] The rubber composition production method described in [17], in which the onium salt is at least one selected from the group consisting of an ammonium salt, a sulfonium salt, and a phosphonium salt,
[19] The rubber composition production method described in [18], in which the ammonium salt is a quaternary ammonium salt,
[20] The rubber composition production method described in [19], in which the quaternary ammonium salt is choline chloride, and
[21] The rubber composition production method described in any one of [17] to [20], in which the hydrogen bond donor is at least one selected from a urea derivative and alkylene glycol.

### Advantageous Effects of Invention

As the rubber composition of the present invention, it is possible to obtain a rubber composition having a largely reduced blending amount of metal oxide such as zinc oxide, which can have the same vulcanization characteristics and vulcanized-rubber physical properties as those of a rubber composition in which a large amount of metal oxide is blended, while considering the environment.

### Description of Embodiments

Hereinafter, a rubber composition according to an embodiment of the present invention will be described in detail.

### [Rubber Composition]

In the present invention, a rubber composition refers to an uncrosslinked rubber composition before crosslinking, if there is no limitation of "after crosslinking."

The present invention is a rubber composition containing a rubber component, a eutectic compound, metal oxide, and a peroxide-based crosslinking agent.

In addition to the compounding materials, if desired, filler, a sulfur-containing crosslinking agent (including sulfur), stearic acid, and an organometallic compound (for example, an organic acid metal salt) are contained. Further, other optional components such as a process oil and/or a bulking agent oil, resin, wax, a crosslinking accelerator, a scorch inhibitor, a decomposition inhibitor, an antioxidant, and other rubber compounding additives known in the related technical field may also be contained. However, without any limitation to these, other optional components may also be contained.

### [Eutectic compound]

It is desirable that a eutectic compound according to the present invention is a mixed product of at least one type of onium salt selected from the group consisting of an ammonium salt, a sulfonium salt, and a phosphonium salt, and a hydrogen bond donor. The eutectic compound may be a liquid, and is also referred to as a eutectic solvent or a deep eutectic solvent (DES) in a case of a liquid, and is a liquid at a room temperature (23 °C).

In one or more embodiments, the eutectic compound has a lower melting point than each of the compounds to be combined. As a result, the eutectic compound contains a composition formed by combining two or more compounds.

Although binding on any particular theory is not intended, it may be thought that the eutectic components may react or interact in other ways to form a complex.

Therefore, any reference to a eutectic compound, a eutectic combination, a eutectic pair, or a eutectic complex includes a combination and a reaction product or a complex between constituents that are combined that yield a lower melting point than the respective constituents. For example, in one or more embodiments, useful eutectic compositions may be defined by Formula (I).

Cat⁺X⁻zY ... (I)

Here, Cat⁺ is a cation, X⁻ is a counter anion (for example, a Lewis base), and z indicates the number of Y molecules that interact with counter anions (for example, a Lewis base).

The Lewis base, for example, Cat⁺, may include ammonium, phosphonium, or sulfonium cations.

X⁻ may include, for example, a halide ion.

In one or more embodiments, z is the number that achieves a deep eutectic solvent, or in other embodiments, z is a number that achieves a complex having a lower melting point than each of eutectic components.

In one or more embodiments, a useful eutectic compound includes a combination of an acid and a base, and the acid and the base may include Lewis acid and base, or Bronsted acid and base.

In one or more embodiments, the useful eutectic compound includes a combination of a quaternary ammonium salt and metal halide (referred to as a type I eutectic compound), a combination of a quaternary ammonium salt and a metal halide hydrate (referred to as a type II eutectic compound), a combination of a quaternary ammonium salt and a hydrogen bond donor (referred to as a type III eutectic compound), or a combination of a metal halide hydrate and a hydrogen bond donor (referred to as a type IV eutectic compound).

### (Onium Salt)

A similar combination using a sulfonium salt or a phosphonium salt may also be used instead of an ammonium salt.

That is, at least one type of onium salt selected from the group consisting of an ammonium salt, a sulfonium salt, and a phosphonium salt is mixed with a hydrogen bond donor to obtain a eutectic compound as a mixed product.

In the present invention, among onium salts, an ammonium salt is preferable, and among ammonium salts, a quaternary ammonium salt is particularly preferable.

### (Quaternary Ammonium Salt)

In one or more embodiments, a quaternary ammonium salt is a solid at 20 °C.

In this or other embodiments, metal halide and a hydrogen bond donor are solids at 20 °C.

In one or more embodiments, a useful quaternary ammonium salt (this may also be referred to as an ammonium compound) may be defined by Formula (II).

(R₁)(R₂)(R₃)(R₄)-N⁺-Φ⁻ ... (II)

Here, each of R₁, R₂, R₃, and R₄ is individually hydrogen or a monovalent organic group, or alternatively, two of R₁, R₂, R₃, and R₄ are bonded to form a divalent organic group, and Φ is a counter anion.

In one or more embodiments, at least one of R₁, R₂, R₃, and R₄, at least two in other embodiments, or at least three in other embodiments are not hydrogen.

In one or more embodiments, a counter anion (for example, Φ⁻) is selected from the group consisting of halide (X), nitrate (NO₃), tetrafluoroborate (BF₄), perchlorate (ClO₄), triflate (SO₃CF₃), and trifluoroacetate (COOCF₃).

In one or more embodiments, Φ⁻ is a halide ion, and is a chloride ion in a certain embodiment.

In one or more embodiments, the monovalent organic group includes a hydrocarbyl group, and the divalent organic group includes a hydrocarbylene group.

In one or more embodiments, the monovalent or divalent organic group contains heteroatoms (examples thereof include oxygen and nitrogen, and/or halogen atoms, but are not limited thereto).

Therefore, the monovalent organic group may include an alkoxy group, a siloxy group, an ether group, and an ester group, and a carbonyl or acetyl substituent.

In one or more embodiments, the hydrocarbyl group or the hydrocarbylene group contains 1 (or a suitable minimum number) to about 18 carbon atoms, 1 to about 12 carbon atoms in other embodiments, or 1 to about 6 carbon atoms in other embodiments. The hydrocarbyl group and the hydrocarbylene group may be branched, cyclic, or linear. A typical type of hydrocarbyl group includes an alkyl group, a cycloalkyl group, an aryl group and an alkylaryl group. A typical type of hydrocarbylene group includes an alkylene group, a cycloalkylene group, an arylene group, and an alkylarylene group.

In certain embodiments, the hydrocarbyl group is selected from the group consisting of a methyl group, an ethyl group, an octadecyl group, a phenyl group, and a benzyl group.

In certain embodiments, the hydrocarbyl group is a methyl group, and the hydrocarbylene group is an ethylene group or a propylene group.

A useful type of ammonium compound includes a secondary ammonium compound, a tertiary ammonium compound, or a quaternary ammonium compound. In this or other embodiments, the ammonium compound includes, but not limited to, ammonium halide such as ammonium chloride.

In certain embodiments, the ammonium compound is a quaternary ammonium chloride.

In certain embodiments, R₁, R₂, R₃, and R₄ are hydrogen, and the ammonium compound is ammonium chloride.

In one or more embodiments, the ammonium compound is asymmetric.

In one or more embodiments, the ammonium compound contains an alkoxy group, and may be defined by Formula (III).

(R₁)(R₂)(R₃)-N⁺-(R₄-OH)Φ⁻ ... (III)

Here, each of R₁, R₂, and R₃ is individually hydrogen or a monovalent organic group, or alternatively, two of R₁, R₂, and R₃ are bonded to form a divalent organic group, and R₄ is a divalent organic group, and Φ⁻ is a counter anion.

In one or more embodiments, at least one of R₁, R₂, and R₃, at least two in other embodiments, or at least three in other embodiments are not hydrogen.

Examples of the ammonium compound defined by Formula (III) include N-ethyl-2-hydroxy-N,N-dimethylethanaminium chloride, 2-hydroxy-N,N,N-trimethylethanaminium chloride (also known as choline chloride), and N-benzyl-2-hydroxy-N,N-dimethylethanaminium chloride.

In one or more embodiments, the ammonium compound contains a halogen-containing substituent, and may be defined by Formula (IV):

Φ⁻-(R₁)(R₂)(R₃)-N⁺-R₄X ... (IV)

Here, when each of R₁, R₂, and R₃ is hydrogen or a monovalent organic group, or, alternatively two of R₁, R₂, and R₃ are bonded to form a divalent organic group, R₄ is a divalent organic group, X is a halogen atom, and Φ⁻ is a counter anion.

In one or more embodiments, at least one of R₁, R₂, and R₃, at least two in other embodiments, or at least three in other embodiments are not hydrogen.

In one or more embodiments, X is chlorine.

Examples of the ammonium compound defined by Formula (IV) include, but not limited to, 2-chloro-N,N,N-trimethylethylaminium (also referred to as chlorocholine chloride), and 2-(chlorocarbonyloxy)-N,N,N-trimethylethylaminiumchloride.

Specific examples of the quaternary ammonium salt in the present invention include choline chloride, acetylcholine chloride, lauroylcholine chloride, β-methylcholine chloride, carbamylcholine chloride, methacholine chloride, trimethylacethydrazide ammonium chloride, and benzoylcholine chloride, and, N-ethyl-2-hydroxy-N,N-dimethylethanaminiumchloride, N-benzyl-2-hydroxy-N,N-dimethylethanaminiumchloride, and tetramethylammoniumchloride which are described above, and particularly, choline chloride, acetylcholine chloride, and lauroylcholine chloride are preferable.

### [Hydrogen Bond Donor]

In one or more embodiments, a hydrogen bond donor (HBD compound) includes, but not limited to, amine, amide, carboxylic acid, and alcohol.

In one or more embodiments, the hydrogen bond donor contains a hydrocarbon chain component. The hydrocarbon chain component may include a carbon chain length including at least two carbon atoms, at least three in other embodiments, or at least five in other embodiments. Further, in other embodiments, the hydrocarbon chain component includes a carbon chain length having carbon atoms of less than 30, carbon atoms of less than 20 in other embodiments, or carbon atoms of less than 10 in other embodiments.

In one or more embodiments, useful amine contains a compound defined by Formula (a).

R₁-(CH₂)ₓ-R₂ ... (a)

Here, R₁ and R₂ are -NH₂, -NHR₃, or NR₃R₄, and x is an integer of at least 2.

In one or more embodiments, x is 2 to about 10, is about 2 to about 8 in other embodiments, or about 2 to about 6 in other embodiments.

Specific examples of the useful amine include aliphatic amine, ethylenediamine, diethylenetriamine, aminoethylpiperazine, triethylenetetramine, tris(2-aminoethyl)amine, N,N'-bis-(2aminoethyl)piperazine, piperazine ethylenediamine, and tetraethylenepentamine, propylene amine, aniline, substituted aniline, and a combination thereof.

### (Amide Compound)

In one or more embodiments, useful amide contains a compound defined by Formula (b).

R-CO-NH₂ ... (b)

In the formula, R is H, NH₂, CH₃ or CF₃.

Specific examples of the useful amide include, but not limited to, urea, 1-methylurea, 1,1-dimethylurea, 1,3-dimethylurea, thiourea, benzamide, acetamide, and a combination thereof.

In one or more embodiments, useful carboxylic acid includes monofunctional, bifunctional, and trifunctional organic acids. These organic acids may include alkyl acid, aryl acid, and mixed alkyl-aryl acid.

Specific examples of the useful monofunctional carboxylic acid include, but not limited to, aliphatic acid, phenylpropionic acid, phenylacetic acid, benzoic acid, and a combination thereof.

Specific examples of the bifunctional carboxylic acid include, but not limited to, oxalic acid, malonic acid, adipic acid, succinic acid, and a combination thereof.

Specific examples of the trifunctional carboxylic acid include citric acid, tricarballylic acid, and a combination thereof.

The types of alcohol may include, but not limited to, monool, diol, and triol. Specific examples of monool include aliphatic alcohol, phenol, substituted phenol, and a mixture thereof. Specific examples of diol include, but not limited to, ethylene glycol, propylene glycol, resorcinol, substituted resorcinol, and a mixture thereof. Specific examples of triol include glycerol, benzenetriol, and a mixture thereof.

Suitable specific examples of the hydrogen bond donor include a urea derivative and alkylene glycol.

The urea derivative includes a compound defined by Formula (c).

R₂N-CX-NR₂ ... (c)

In the formula, R is H or a monovalent organic group, and X is O (an oxygen atom) or S (a sulfur atom). As the monovalent organic group, a monovalent hydrocarbon group that may have heteroatoms is preferable.

Specific examples of the urea derivative include, but not limited to, urea, 1-methylurea, 1,1-dimethylurea, 1,3-dimethylurea, thiourea, and a combination thereof.

### (Alkylene Glycol)

Examples of the hydrogen bond donor include alkylene glycol as well as the urea derivative. The alkylene glycol is preferably ethylene glycol having 2 carbon atoms, propylene glycol having 3 carbon atoms, or butylene glycol having 4 carbon atoms, and particularly preferably ethylene glycol.

### (Metal Halide)

The types of metal halide may include, but not limited to, chloride, bromide, iodide and fluoride.

In one or more embodiments, these metal halides include, but not limited to, transition metal halides.

Those skilled in the art can easily imagine corresponding metal halide hydrates.

Specific examples of useful metal halide include, but not limited to, aluminum chloride, aluminum bromide, aluminum iodide, zinc chloride, zinc bromide, zinc iodide, tin chloride, tin bromide, tin iodide, iron chloride, iron bromide, iron iodide, and a combination thereof.

Those skilled in the art can easily imagine corresponding metal halide hydrates.

For example, aluminum chloride hexahydrate and copper chloride dihydrate correspond to the halides.

### (Production of Eutectic Compound)

Those skilled in the art may select suitable eutectic members at an appropriate molar ratio in order to provide a eutectic composition of a desired eutectic compound.

Those skilled in the art understand that the molar ratio of a counter first compound (for example, Lewis base) and a counter second compound (for example, Lewis acid) varies on the basis of selected compounds.

The melting point of the eutectic compound is present between melting points of two components, and the melting point of the eutectic compound is determined according to the molar ratio.

However, nevertheless, it is possible to change the molar ratio of the first compound and the second compound so as to cause suppression of a melting point of a eutectic solvent relative to a melting point of each of the first and second compounds, rather than a minimum melting point.

Therefore, carrying out one or more embodiments of the present invention involves forming a eutectic solvent at a molar ratio outside a eutectic point.

In the eutectic compound according to the present invention, in one or more embodiments, compounds for a eutectic pair, and a molar ratio of a first compound and a counter second compound are selected such that it is possible to produce a mixture having a melting point of less than 130 °C, less than 110 °C in other embodiments, less than 100 °C in other embodiments, less than 80 °C in other embodiments, less than 60 °C in other embodiments, less than 40 °C in other embodiments, or less than 30 °C in other embodiments.

In this or other embodiments, the compounds for the eutectic pair, and the molar ratio of the compounds are selected such that it is possible to produce a mixture having a melting point of greater than 0 °C, greater than 10 °C in other embodiments, greater than 20 °C in other embodiments, greater than 30 °C in other embodiments, or greater than 40 °C in other embodiments.

In the eutectic compound according to the present invention, in one or more embodiments, the compounds for the eutectic pair, and the molar ratio of the first compound to the second compound are selected to generate an ability to dissolve a desired metal compound or a eutectic solvent having the ability. This may be referred to as solubility or dissolving power.

As will be understood by those skilled in the art, when a saturated solution is prepared, the solubility may be quantified on the basis of the mass of a metal compound dissolved in a given mass of eutectic solvent over a specific time, at a specific temperature and pressure.

In one or more embodiments, the eutectic solvent of the present invention is selected so as to achieve the zinc oxide solubility of greater than 100 ppm, greater than 500 ppm in other embodiments, greater than 1,000 ppm in other embodiments, greater than 1,200 ppm in other embodiments, greater than 1,400 ppm in other embodiments, or greater than 1,600 ppm in other embodiments, over 24 hours at 50 °C under atmospheric pressure. Here, ppm is measured on the basis of mass solute vs mass solvent.

In one or more embodiments, the eutectic compound is formed by combining the first compound and the second compound at an appropriate molar ratio so that a solvent composition (that is, a liquid composition at a desired temperature) is provided.

A eutectic mixture may be mechanically agitated by using various techniques including, but not limited to, a solid state mixing or blending technique.

Generally speaking, the eutectic mixture for producing the eutectic compound is mixed or otherwise agitated until a visually uniform liquid is formed.

Further, the eutectic mixture may be formed at a high temperature. For example, the eutectic compound may be formed by heating the eutectic mixture at a temperature of greater than 50 °C, greater than 70 °C in other embodiments, or greater than 90 °C in other embodiments.

Mixing may be continued during heating of the eutectic mixture. Once a desired mixture is formed, the eutectic solvent may be cooled to room temperature.

In one or more embodiments, cooling of the eutectic mixture may be performed at a controlled speed such as a speed of less than 1 °C /min.

In one or more embodiments, the useful eutectic compound is commercially available. For example, the deep eutectic solvent is commercially available under a tradename Ionic Liquids from Scionix.

The useful eutectic compound is also generally known as those described in U.S. patent gazette.

Nos.2004/0097755 A1 and 2011/0207633 A1 are incorporated herein by reference.

In the eutectic compound according to the present invention, a combination of a quaternary ammonium salt and a hydrogen bond donor is preferable, and the molar ratio (quaternary ammonium salt/hydrogen bond donor) is preferably 1/100 to 10/1, more preferably 1/10 to 5/1, further preferably 1/5 to 2/1, particularly preferably 1/5 to 1/1. This is because when the molar ratio (quaternary ammonium salt/hydrogen bond donor) falls within a range of 1/100 to 10/1, the eutectic compound is efficiently produced. Particularly, the molar ratio equal to or greater than 1/100 is preferable because the melting point is lower than that of the quaternary ammonium salt, and the molar ratio equal to or lower than 10/1 is preferable because the melting point is lower than that of the hydrogen bond donor. In this case, the temperature for the eutectic mixture of the quaternary ammonium salt and the hydrogen bond donor is set such that the eutectic solvent is produced within a range of 50 to 150 °C, preferably 70 to 120 °C.

### (Rubber Component)

In one or more embodiments, a rubber component may include a polymer in which cross-linkable rubber that may also be referred to as rubber or cross-linkable elastomer is crosslinked so as to form a composition having rubbery or elastomer properties.

Examples of such a rubber component include natural rubber and synthetic rubber. Examples of the synthetic rubber may typically include conjugated diene monomer polymer rubber, copolymer rubber of conjugated diene monomers and other monomers such as vinyl substituted aromatic monomers, and copolymer rubber of ethylene, one or more types of α-olefins, and one or more optionally selected types of diene monomers.

Specific examples of the rubber component preferably include at least one selected from the group consisting of ethylene-propylene copolymer rubber (EPM), ethylene-propylene-diene terpolymer rubber (EPDM), butyl rubber, acrylic rubber, fluoro rubber, chlorosulfonated polyethylene, urethane rubber, halogenated butyl rubber, styrene-butadiene copolymer rubber, styrene-isoprene copolymer rubber, styrene-isoprene-butadiene terpolymer rubber, isoprene-butadiene copolymer rubber, ethylene-propylene-diene terpolymer rubber, natural rubber, synthetic polyisoprene rubber, polybutadiene rubber, isobutylene-isoprene copolymer rubber and neoprene rubber. Such a rubber component may have countless macromolecular structures including linear, branched, and star-shaped structures. Such a rubber component may also include one or more functional units typically containing heteroatoms.

In the present invention, it is more desirable that the rubber component includes at least one selected from the group consisting of ethylene-propylene copolymer rubber (EPM), ethylene-propylene-diene terpolymer rubber (EPDM), butyl rubber, acrylic rubber, fluoro rubber, chlorosulfonated polyethylene, urethane rubber, and halogenated butyl rubber, and it is particularly desirable that the rubber component includes at least one selected from the group consisting of ethylene-propylene copolymer rubber (EPM) and ethylene-propylene-diene terpolymer rubber (EPDM).

### [Metal Oxide]

As suggested above, a cross-linkable rubber composition of the present invention includes metal oxide as a metal activator.

In one or more embodiments, the metal oxide is an activator (that is, it assists crosslinking or curing of rubber).

In other embodiments, as metal oxide that becomes a metal activator, zinc oxide is preferable.

In certain embodiments, the metal oxide is zinc organic acid formed *in situ* by the reaction or interaction between zinc oxide and organic acid (for example, stearic acid).

Further, in addition to zinc oxide, a magnesium compound such as magnesium hydroxide as a metal compound that becomes metal oxide, an iron compound such as iron oxide as the metal compound, or a cobalt compound such as cobalt carboxylate as the metal compound may be blended.

### (Zinc Oxide)

In the present invention, it is desirable that in the cross-linkable rubber composition, the content of zinc oxide is 2 parts by mass or less with respect to 100 parts by mass of the rubber component. Further, in other embodiments, the content of zinc oxide is preferably 1 part by mass or less, and in other embodiments, the content of zinc oxide is preferably 0.7 parts by mass or less.

In the present invention, although metal oxide such as zinc species is contained only at a limited level, a crosslinked product which is a crosslinked rubber product is characterized, at room temperature, by a 300% elongation tensile stress of greater than 3 MPa, greater than 5 MPa in other embodiments, or greater than 7 MPa in other embodiments as determined by JIS K6251:2010.

### (Filler)

As suggested above, the cross-linkable rubber composition of the present invention may contain one or more fillers. These fillers may include reinforced filler and non-reinforced filler. Exemplary fillers include carbon black, silica, and various inorganic fillers.

### (Carbon Black)

Examples of useful carbon black include furnace black, channel black, and lamp black.

More specific examples of carbon black include furnace black such as SAF black, ISAF black, and HAF black, and channel black such as intermediate treated channel black, hardening treated channel black, conductive channel black, and acetylene black.

In certain embodiments, carbon black may have a CTAB specific surface area of at least 20 m²/g, or at least 35 m²/g in other embodiments. The specific surface area value may be determined by ASTMD-1765 by using a cetyltrimethylammonium bromide (CTAB) technique.

Carbon black may take a pelletized form or a non-pelletized cotton-like form.

A preferred form of carbon black may depend on the type of a mixing device used for mixing the rubber composition.

### (Inorganic Filler)

Examples of the inorganic filler used for the cross-linkable rubber composition of the present invention include, in addition to silica, an inorganic compound represented by the following chemical formula (V).

nM·xSiO_{y}·zH₂O ... (V)

In Formula (V), M is at least one selected from metals selected from the group consisting of aluminum, magnesium, titanium, calcium, and zirconium, oxides or hydroxides of these metals, and hydrates thereof, or carbonates of these metals. Each of n, x, y and z is an integer of 1 to 5, an integer of 0 to 10, an integer of 2 to 5, or an integer of 0 to 10. These fillers may be used alone or in combination of two or more thereof.

Specific examples thereof include aluminum hydroxide, magnesium hydroxide, titanium oxide, boron nitride, iron oxide, mica, talc (magnesium silicate hydrate), and clay (aluminum silicate hydrate).

In the inorganic compound represented by the chemical formula (V), it is desirable that M is at least one selected from aluminum metal, aluminum oxide, aluminum hydroxide, aluminum hydrate, and aluminum carbonate. Among them, the filler is preferably aluminum hydroxide.

Examples of useful organic filler include starch.

### (Silica)

Examples of suitable silica filler include precipitated amorphous silica, wet silica (hydrous silicic acid), dry silica (anhydrous silicic acid), fumed silica, calcium silicate, aluminum silicate, and magnesium silicate.

In one or more embodiments, silica may be characterized by its surface area which gives a measure of its reinforcement characteristic. Examples of a method of measuring the surface area include the Brunauer, Emmet and Teller ("BET") method (described in J.Am.Chem.Soc., vol.60, p.309 et seq.).

The BET surface area of silica is generally less than 450 m²/g.

Useful range of the surface area includes about 32 to about 400 m²/g, about 100 to about 250 m²/g, or about 150 to about 220 m²/g.

When one or more types of silica are used, pH of the silica is generally about 5 to about 7 or is slightly greater than 7, or is about 5.5 to about 6.8 in other embodiments.

In one or more embodiments in which silica is used as filler (alone, or in combination with other fillers), a coupling agent and/or a shielding agent may be added to the rubber composition during mixing in order to enhance the interaction between silica and elastomer.

### (Coupling Agent)

Useful coupling and shielding agents are disclosed in U.S. patent numbers 3,842,111, 3,997,581, 3,978,594, 3,580,919, 3,583,583,245, 5,663,396, 5,674,932, 5,684,171, 5,684,172, 5,696,197, 6,608,145, 6,667,362, 6,579,949, and 6,590,017, which are incorporated herein by reference.

Examples of a sulfur-containing silane coupling agent include bis(trialkoxysilylorgano)polysulfide or mercapto-organoalkoxysilane.

Types of bis(trialkoxysilylorgano)polysulfide include bis(trialkoxysilylorgano)disulfide and bis(trialkoxysilylorgano)tetrasulfide.

Specific examples of bis(trialkoxysilylorgano)polysulfide include bis(trialkoxysilylpropyl)disulfide and bis(trialkoxysilylpropyl)tetrasulfide.

### (Resin)

As suggested above, the cross-linkable rubber composition of the present invention may include one or more resins.

These resins may include a phenol resin and a hydrocarbon resin, for example, an alicyclic resin, an aliphatic resin, an aromatic resin, a terpene resin, and a combination thereof.

Examples of a useful resin include resins commercially available from Chemfax, Dow Chemical Company, Eastman Chemical Company, Idemitsu, Neville Chemical Company, Nippon, PolySat Inc, Resinall CoRp, Pinova Inc, and YasuhaRa Chemical.

In one or more embodiments, a useful hydrocarbon resin may be characterized in that the glass transition temperature (Tg) is about 30 to about 160 °C, about 35 to about 60 °C in other embodiments, or about 70 to about 110 °C in other embodiments.

In one or more embodiments, the useful hydrocarbon resin may be characterized in that the softening point is higher than Tg.

In certain embodiments, the useful hydrocarbon resin has a softening point of about 70 to about 160 °C, about 75 to about 120 °C in other embodiments, or about 120 to about 160 °C in other embodiments.

In certain embodiments, one or more alicyclic resins are used in combination with one or more aliphatic, aromatic, and terpene resins.

In one or more embodiments, one or more alicyclic resins are used as a main mass component (for example, greater than 50% by mass) with respect to the total load of resins. For example, the resins use include at least 55% by mass, at least 80% by mass in other embodiments, or at least 99% by mass in other embodiments of one or more types of alicyclic resins.

In one or more embodiments, the alicyclic resins include both an alicyclic homopolymer resin, and an alicyclic copolymer resin including those derived from alicyclic monomers in combination with one or more optionally selected other (non-alicyclic) monomers, and most of the mass of all monomers is alicyclic.

Non-limiting examples of a suitable useful alicyclic resin include a cyclopentadiene ("CPD") homopolymer or copolymer resin, a dicyclopentadiene ("DCPD") homopolymer or copolymer resin, and a combination thereof.

Non-limiting examples of the alicyclic copolymer resin include a CPD/vinyl aromatic copolymer resin, a DCPD/vinyl aromatic copolymer resin, a CPD/terpene copolymer resin, a DCPD/terpene copolymer resin, a CPD/aliphatic copolymer resin (for example, a CPD/C5 fraction copolymer resin), a DCPD/aliphatic copolymer resin (for example, a DCPD/C5 fraction copolymer resin), and a CPD/aromatic copolymer resin (for example, a CPD/C9 fraction). A DCPD/aromatic copolymer resin (for example, a DCPD/aromatic copolymer resin), a DCPD/aromatic-aliphatic copolymer resin (for example, a DCPD/C9 fraction copolymer resin), a CPD/aromatic-aliphatic copolymer resin (for example, DCPD/C5 and C9 fraction copolymer resins), a CPD/vinyl aromatic copolymer resin (for example, a CPD/styrene copolymer resin), a CPD/vinyl aromatic copolymer resin (for example, a DCPD/styrene copolymer resin), a CPD/terpene copolymer resin (for example, a limonene/CPD copolymer resin) and a DCPD/terpene copolymer resin (for example, a limonene/DCPD copolymer resin).

In certain embodiments, the alicyclic resin may include one hydrogenated form (that is, a hydrogenated alicyclic resin) among the above-described alicyclic resins.

In other embodiments, as the alicyclic resin, a hydrogenated alicyclic resin is excluded; that is, the alicyclic resin is not hydrogenated.

In certain embodiments, one or more aromatic resins are used in combination with one or more aliphatic, alicyclic, and terpene resins.

In one or more embodiments, one or more aromatic resins are used as a main mass component (for example, greater than 50% by mass) with respect to the total load of resins. For example, the resins use include at least 55% by mass, at least 80% by mass in other embodiments, or at least 99% by mass in other embodiments of one or more types of aromatic resins.

In one or more embodiments, the aromatic resins include both an aromatic homopolymer resin, and an aromatic copolymer resin including those derived from one or more aromatic monomers in combination with one or more other (nonaromatic) monomers, and the maximum amount of optionally selected types of monomers is aromatic.

Non-limiting examples of a useful aromatic resin include a coumarone-indene resin and an alkyl-phenol resin, as well as a vinyl aromatic homopolymer or copolymer resin (for example, those derived from one or more of following monomers): and optionally selected vinyl aromatic monomers produced from αmethylstyrene, styrene, orthomethylstyrene, metamethylstyrene, paramethylstyrene, vinyltoluene, para(tert-butyl)styrene, methoxystyrene, chlorostyrene, hydroxystyrene, vinylmesitylene, divinylbenzene, vinylnaphthalene, or a C9 fraction or a C8-C10 fraction.

Non-limiting examples of the vinyl aromatic copolymer resin include a vinyl aromatic/terpene copolymer resin (for example, a limonene/styrene copolymer resin), a vinyl aromatic/C5 fraction resin (for example, a C5 fraction/styrene copolymer resin), and a vinyl aromatic/aliphatic copolymer resin (for example, a CPD (cyclopentadiene)/styrene copolymer resin, and a DCPD (dicyclopentadiene)/styrene copolymer resin).

Non-limiting examples of an alkylphenol resin include an alkylphenol-acetylene resin such as a p-tert-butylphenol-acetylene resin, and an alkylphenolformaldehyde resin (those having a low degree of polymerization, etc.), and in certain embodiments, the aromatic resin may include one hydrogenated form (that is, a hydrogenated aromatic resin) among the above-described aromatic resins.

In other embodiments, as the aromatic resin, a hydrogenated aromatic resin is excluded, that is, the aromatic resin is not hydrogenated.

In certain embodiments, one or more aliphatic resins are used in combination with one or more alicyclic, aromatic and terpene resins.

In one or more embodiments, one or more aliphatic resins are used as a main mass component (for example, greater than 50% by mass) with respect to the total load of resins. For example, the resins used contains one or more types of aliphatic resins at the content of.at least 55% by mass, at least 80% by mass in other embodiments, or at least 99% by mass in other embodiments.

In one or more embodiments, the aliphatic resins include an aliphatic homopolymer resin, and those derived from one or more aliphatic monomers in combination with one or more other (non-aliphatic) monomers.

Non-limiting examples of a useful aliphatic resin include a C5 fraction homopolymer or copolymer resin, a C5 fraction/C9 fraction copolymer resin, a C5 fraction/vinyl aromatic copolymer resin (for example, a C5 fraction/styrene copolymer resin), a C5 fraction/alicyclic copolymer resin, a C5 fraction/C9 fraction/alicyclic copolymer resin, and a combination thereof.

Non-limiting examples of the alicyclic monomer include, but not limited to, cyclopentadiene ("CPD") and dicyclopentadiene ("DCPD").

In certain embodiments, the aliphatic resin may include one hydrogenated form (that is, a hydrogenated aliphatic resin) among the above-described aliphatic resins.

In other embodiments, as the aliphatic resin, a hydrogenated aliphatic resin is excluded; that is, in these embodiments, the aliphatic resin is not hydrogenated.

In one or more embodiments, the terpene resins include both a terpene homopolymer resin, and a terpene copolymer resin including those derived from one or more terpene monomers in combination with one or more other (non-terpene) monomers, and the maximum amount of optionally selected types of monomers is terpene.

Non-limiting examples of a useful terpene resin include an alpha-pinene resin, a beta-pinene resin, a limonene resin (for example, dipentene which is a racemic mixture of L- and D-isomers such as L-limonene and D-limonene), beta-phellandrene, delta-3-carene, delta-2-carene, a pinene-limonene copolymer resin, a terpene phenol resin, an aromatic modified terpene resin, and a combination thereof.

In certain embodiments, the terpene resin may include one hydrogenated form (that is, a hydrogenated terpene resin) among the above-described terpene resins.

In other embodiments, as the terpene resin, a hydrogenated terpene resin is excluded; that is, in these embodiments, the terpene resin is not hydrogenated.

### [Peroxide-Based Crosslinking Agent]

Examples of the crosslinking agent in the present invention include a peroxide-based crosslinking agent. Examples of the peroxide-based crosslinking agent include diacyl peroxides, dialkyl peroxides, hydroperoxides, peroxyketals, alkylperesters, percarbonates, and ketone peroxides.

Among them, the crosslinking agent is preferably perbenzoic acid, benzoyl peroxide, cumene peroxide, dicumyl peroxide, 1,1-bis(1,1-dimethylethylperoxy)cyclohexane, or t-butylperoxylaurate, t-butylperoxy-2-ethylhexanate. In the present invention, it is desirable to use at least one selected from these peroxide-based crosslinking agents.

It is desirable that the blending amount of the peroxide-based crosslinking agent is preferably 0.1 to 10 parts by mass, more preferably 0.1 to 5 parts by mass, further preferably 0.1 to 2 parts by mass relative to 100 parts by mass of the rubber component. When the blending amount of the peroxide-based crosslinking agent falls within the range, a heat resistance is obtained without impairing durability such as an elongation fatigue characteristic, and energy saving, and desired heat generation is achieved in a radical reaction of unsaturated fatty acid with a metal salt, so that a vulcanization time is shortened.

In the present invention, sulfur or a sulfur-containing crosslinking agent may be used in addition to the peroxide-based crosslinking agent, as desired. Examples of the suitable sulfur crosslinking agent include sulfur-donating crosslinking agents such as amine disulfide, polymer polysulfide or sulfur olefin adduct; and insoluble polymer sulfur.

The crosslinking agents may be used alone or in combination. Those skilled in the art may easily select the amounts of the crosslinking agents in order to achieve a desired crosslinking level.

In the present invention, the mass ratio (parts by mass of the metal oxide/ parts by mass of the peroxide-based crosslinking agent) is preferably 0.05 to 3.0, more preferably 0.07 to 2.0, further preferably 0.10 to 0.6, particularly preferably 0.20 to 0.6. The mass ratio equal to or greater than 0.05 is preferable for the reason, and the mass ratio equal to or less than 0.6 is preferable from the viewpoint of reducing the use amount of metal oxide (particularly, zinc oxide).

### (Curing Accelerator)

In one or more embodiments, the crosslinking agent is used in combination with a crosslinking accelerator.

In one or more embodiments, the accelerator is used for controlling the time and/or temperature required for crosslinking and improving the properties of a crosslinked product.

Examples of the accelerator include thiazole vulcanization accelerators such as 2-mercaptobenzothiazole, dibenzothiazyldisulfide, and N-cyclohexyl-2-benzothiazyl-sulfenamide (CBS), and guanidine vulcanization accelerators such as diphenylguanidine (DPG).

Those skilled in the art may easily select the amount of the crosslinking accelerator in order to achieve a desired curing level.

### (Other Compounding Agent)

Other compounding agents typically used for rubber compounding may also be added to the rubber composition.

These include accelerators, accelerator activators, oils, additional plasticizers, waxes, scorch inhibitors, processing aids, zinc oxide, tackifier, reinforced resin, fatty acid such as stearic acid, a peptizer , and an antidegradant inhibitor such as an antioxidant and an anti-ozone agent.

In certain embodiments, those that have been conventionally used as a softener are included. Useful oils that may be used as softeners or bulking agents include, but not limited to, low PCA oils including an aromatic oil, a paraffin oil, a naphthenic oil, a vegetable oil other than a castor oil, MES, TDAE, and SRAE, and a heavy naphthenic oil.

Suitable low PCA oils also include various plant-derived oils that may be harvested from vegetables, nuts, and seeds.

Non-limiting examples include, but not limited to, a soybean or a soybean oil, a sunflower oil, a safflower oil, a corn oil, a flaxseed oil, a cottonseed oil, a rapeseed oil, a cashew oil, a sesame oil, a lakudaria oil, a jojoba oil, a macadamia nut oil, a coconut oil, and a palm oil.

In one or more embodiments, organic acid is carboxylic acid.

In certain embodiments, carboxylic acid is fatty acid including saturated and unsaturated fatty acids.

In certain embodiments, saturated fatty acid such as stearic acid is used. Examples of other useful acids include, but not limited to, palmitic acid, arachidic acid, oleic acid, linoleic acid, and arachidonic acid.

### (Blending Amount of Eutectic Compound)

In one or more embodiments, the cross-linkable composition contains the the eutectic compound at the content of greater than 0.005 parts by mass, greater than 0.01 parts by mass in other embodiments, or greater than 0.02 parts by mass in other embodiments, relative to 100 parts by mass of the rubber component.

In this or other embodiments, cross-linkable rubber composition contains the eutectic compound at the content of less than 3 parts by mass, less than 1 part by mass in other embodiments, or less than 0.1 parts by mass in other embodiments, relative to 100 parts by mass of the rubber component.

In one or more embodiments, the cross-linkable rubber composition contains the eutectic compound at the content of about 0.005 to about 3 parts by mass, about 0.01 to about 1 part by mass in other embodiments, or about 0.02 to about 0.1 parts by mass in other embodiments, relative to 100 parts by mass of the rubber component.

In one or more embodiments, the amount of the eutectic compound may be described with reference to the blending amount of metal oxide (zinc oxide or the like).

In one or more embodiments, the cross-linkable composition contains the eutectic solvent at the content of greater than 2% by mass, greater than 3% by mass in other embodiments, or greater than 5% by mass in other embodiments, on the basis of the total mass of the eutectic compound and the metal oxide (for example, zinc oxide) present in the cross-linkable composition.

In this or other embodiments, the cross-linkable composition contains the eutectic solvent at the content of less than 20% by mass, less than 15% by mass in other embodiments, or less than 12% by mass in other embodiments, on the basis of the total mass of the eutectic compound and the metal oxide (for example, zinc oxide) present in the cross-linkable composition.

In one or more embodiments, the cross-linkable composition contains the eutectic compound at the content of about 2 to about 15% by mass, about 3 to about 12% by mass in other embodiments, or about 5 to about 10% by mass in other embodiments, on the basis of the total mass of the eutectic solvent and the metal oxide (for example, zinc oxide) present in the cross-linkable composition.

In one or more embodiments, the cross-linkable rubber composition contains the metal oxide (for example, zinc oxide) at the content of greater than 0.05 parts by mass, greater than 0.1 parts by mass in other embodiments, or greater than 0.15 parts by mass in other embodiments relative to 100 parts by mass of the rubber component.

In this or other embodiments, the cross-linkable rubber composition contains the metal oxide (for example, zinc oxide) at the content of less than 2 parts by mass, less than 1 part by mass in other embodiments, or less than 0.75 parts by mass in other embodiments.

In one or more embodiments, the cross-linkable rubber composition contains the metal oxide (for example, zinc oxide) at the content of about 0.05 to about 2 parts by mass, about 0.1 to about 1 part by mass in other embodiments, or about 0.15 to about 0.75 parts by mass in other embodiments.

### (Organic Acid)

In one or more embodiments, the cross-linkable rubber composition the organic acid (for example, stearic acid) at the content of greater than 0.5 parts by mass, greater than 0.7 parts by mass in other embodiments, or greater than 1.0 parts by mass in other embodiments relative to 100 parts by mass of the rubber component.

In this or other embodiments, the cross-linkable rubber composition contains the organic acid (for example, stearic acid) at the content of less than 5 parts by mass, less than 3 parts by mass in other embodiments, or less than 2 parts by mass in other embodiments.

In one or more embodiments, the cross-linkable rubber composition contains the organic acid (for example, stearic acid) at the content of about 0.5 to about 5 parts by mass, about 0.7 to about 3 parts by mass in other embodiments, or about 1.0 to about 2 parts by mass in other embodiments relative to 100 parts by mass of the rubber component.

### (Blending Amount of Filler)

In one or more embodiments, the cross-linkable rubber composition contains the filler at the content of at least 0 parts by mass, at least 10 parts by mass in other embodiments, or at least 20 parts by mass in other embodiments relative to 100 parts by mass of the rubber component.

In this or other embodiments, the cross-linkable rubber composition contains the filler at the content of at most 200 parts by mass, at most 100 parts by mass in other embodiments, or at most 70 parts by mass in other embodiments.

In one or more embodiments, the cross-linkable rubber composition contains the filler at the content of about 0 to about 200 parts by mass, about 10 to about 100 parts by mass in other embodiments, or about 20 to about 70 parts by mass in other embodiments.

### (Blending Amount of Carbon Black)

In one or more embodiments, the cross-linkable rubber composition contains the carbon black at the content of at least 0 parts by mass, at least 10 parts by mass in other embodiments, or at least 20 parts by mass in other embodiments relative to 100 parts by mass of the rubber component.

In this or other embodiments, the cross-linkable rubber composition the carbon black at the content of at most 200 parts by mass, at most 100 parts by mass in other embodiments, or at most 70 parts by mass in other embodiments.

In one or more embodiments, the cross-linkable rubber composition the carbon black at the content of about 0 to about 200 parts by mass, about 10 to about 100 parts by mass in other embodiments, or about 20 to about 70 parts by mass in other embodiments relative to 100 parts by mass of the rubber component.

### (Blending Amount of Silica)

In one or more embodiments, the cross-linkable rubber composition contains the silica at the content of at least 5 parts by mass, at least 25 parts by mass in other embodiments, or at least 50 parts by mass in other embodiments relative to 100 parts by mass of the rubber component.

In this or other embodiments, the cross-linkable rubber composition contains the silica at the content of at most 200 parts by mass, at most 130 parts by mass in other embodiments, or at most 80 parts by mass in other embodiments relative to 100 parts by mass of the rubber component.

In one or more embodiments, the cross-linkable rubber composition contains the silica at the content of about 5 to about 200 parts by mass, about 25 to about 130 parts by mass in other embodiments, or about 50 to about 80 parts by mass in other embodiments relative to 100 parts by mass of the rubber component.

### (Filling Ratio of Filler)

In the cross-linkable rubber composition of the present invention, either carbon black or silica may be blended alone, but both carbon black and silica may be blended.

In one or more embodiments, the cross-linkable rubber composition may be characterized by the ratio of the amount of first filler to the amount of second filler.

In one or more embodiments, the mass ratio of carbon black to silica is about 1:1, about 10:1 in other embodiments, about 14:1 in other embodiments, or about 20:1 in other embodiments.

In one or more embodiments, the mass ratio of carbon black to silica is about 1:5, about 1:10 in other embodiments, about 1:14 in other embodiments, or about 1:20 in other embodiments.

### (Blending Amount of Silane Coupling Agent)

In one or more embodiments, the cross-linkable rubber composition contains silane coupling agent at the content of at least 1 part by mass, at least 2 parts by mass in other embodiments, or at least 5 parts by mass in other embodiments relative to 100 parts by mass of silica.

In this or other embodiments, the cross-linkable rubber composition contains the silane coupling agent at the content of at most 20 parts by mass, at most 15 parts by mass in other embodiments, or at most 10 parts by mass in other embodiments, relative to 100 parts by mass of silica.

In one or more embodiments, the cross-linkable rubber composition the silane coupling agent at the content of about 1 to about 20 parts by mass, about 2 to about 15 parts by mass in other embodiments, or about 5 to about 10 parts by mass in other embodiments relative to 100 parts by mass of silica.

### (Blending Amount of Resin)

In one or more embodiments, in the cross-linkable rubber composition contains the resin (for example, the hydrocarbon resin) at the contentof greater than 1 part by mass, greater than 15 in other embodiments, or greater than 25 in other embodiments, relative to 100 parts by mass of the rubber component.

In this or other embodiments, the cross-linkable rubber composition contains the resin (for example, the hydrocarbon resin) at the content of less than 150 parts by mass, less than 120 in other embodiments, or less than 90 in other embodiments, relative to 100 parts by mass of the rubber component.

In one or more embodiments, the cross-linkable rubber composition contains the resin (for example, the hydrocarbon resin) at the content (parts by mass) of about 1 to about 150 parts by mass, about 15 to about 120 in other embodiments, or about 25 to about 90 in other embodiments, relative to 100 parts by mass of the rubber component.

### (Method of Producing Rubber Composition)

A method of producing the rubber composition of the present invention is preferably a rubber composition production method that includes
(i) a process (A) of producing a masterbatch by kneading a rubber component, a eutectic compound, and metal oxide, and
(ii) a process (B) of producing the rubber composition by kneading the masterbatch, and a peroxide-based crosslinking agent.

In one or more embodiments, cross-linkable rubber and a eutectic solvent are mixed to form the masterbatch, and then, the crosslinking agent is added to the masterbatch so that the cross-linkable composition is produced.

The production of the masterbatch may be performed, for example, by using one or more sub-mixing steps in which one or more components can be sequentially added to the composition as desired, after an initial mixture is prepared by mixing two or more components.

Further, in the production of the cross-linkable composition, additional components including, but not limited to, carbon black, additional filler, chemically treated inorganic oxide, silica, a silane coupling agent, a silica dispersant, process oil, zinc oxide, a processing aid such as fatty acid, and a decomposition inhibitor such as an antioxidant or an ozone inhibitor may be added by using a conventional technique.

In the present invention, it is desirable that the eutectic compound is produced by mixing a quaternary ammonium salt and a hydrogen bond donor. In the present invention, it is desirable that the eutectic compound is produced before the eutectic compound is introduced into the rubber component.

That is, it is desirable that a first component (a quaternary ammonium salt) in a mixture constituting the eutectic compound is pre-mixed with a second component (a hydrogen bond donor) in the mixture before the eutectic compound is introduced into a cross-linkable rubber composition.

In one or more embodiments, the combined components in the mixture are mixed until a uniform liquid composition is observed.

When the eutectic compound is blended, the blending amount of metal oxide such as zinc oxide may be largely reduced. Thus, it is possible to obtain a rubber composition that may have the same vulcanization characteristics and vulcanized-rubber physical properties as those of a rubber composition in which a large amount of metal oxide is blended, while considering the environment.

Further, the destruction resistance (particularly, a crack growth resistance) of a crosslinked rubber composition is improved.

That is, when both the eutectic compound and the metal oxide are blended in the rubber composition, the destruction resistance (particularly, a crack growth resistance) of the crosslinked rubber composition is further dramatically improved.

In these embodiments, it is assumed that the eutectic compound is a carrier of zinc oxide.

For example, the eutectic compound can be combined with a larger amount of zinc oxide, and zinc oxide acts as a carrier for delivering a combination of zinc oxide and the eutectic compound, as a solid, to the rubber in a mixer.

In other embodiments, one of members of a eutectic pair acts as a solid carrier for the eutectic compound, and thus a combination of the first and second components of the eutectic compound forms a preliminary combination that may be added as a solid to the rubber in the mixer.

Those skilled in the art can understand that in the formation of a mixture having these properties, the excess first or second eutectic member may be excessively combined with the other eutectic member so as to maintain a solid composition at a desired temperature.

In one or more embodiments, the eutectic compound is introduced, as an initial component in the formation of the rubber masterbatch, into the cross-linkable rubber composition.

As a result, the eutectic compound undergoes high-shear/ high-temperature mixing with the rubber component.

In one or more embodiments, the eutectic compound (particularly, the eutectic solvent) is mixed with the rubber component at a minimum temperature of greater than 110 °C, at a minimum temperature of greater than 130 °C in other embodiments, or at a minimum temperature of greater than 150 °C in other embodiments.

In one or more embodiments, high-shear/ high-temperature mixing is performed at a temperature of about 110 °C to about 170 °C.

In other embodiments, the eutectic compound is introduced into the cross-linkable rubber together with the peroxide-based crosslinking agent in a continuous or simultaneous manner.

As a result, the eutectic compound is mixed with the cross-linkable rubber at a maximum temperature of less than 110 °C, less than 105 °C in other embodiments, or less than 100 °C in other embodiments.

In one or more embodiments, the mixing with the crosslinking agent is performed at a temperature of about 70 °C to about 110 °C.

Similarly to the eutectic compound, zinc oxide and stearic acid may be added as initial components to the rubber masterbatch, and thus, these components undergo high-temperature/ high-shear mixing.

Otherwise, zinc oxide and stearic acid may be added together with a sulfur-based crosslinking agent, and thus undergo only low-temperature mixing.

In one or more embodiments, separately from the eutectic compound, zinc oxide is individually introduced into the cross-linkable rubber.

In other embodiments, it is desirable that the zinc oxide and the eutectic compound are pre-mixed in order to form a zinc oxide masterbatch, so that the zinc oxide masterbatch is obtained. In this case, it is desirable that zinc oxide is dissolved in the eutectic compound. In the zinc oxide masterbatch as a mixture of the zinc oxide and the eutectic compound, when the zinc oxide is dissolved in the eutectic compound, the dispersion of zinc oxide in the rubber composition is improved by adding the zinc oxide masterbatch to the rubber composition.

### (Mixing Condition)

In one or more embodiments, the cross-linkable composition is produced by first mixing the cross-linkable rubber and the eutectic compound at a temperature of about 110 to about 180 °C, or about 130 to about 170 °C in other embodiments.

In certain embodiments, after the initial mixing, the composition (that is, the masterbatch) is cooled at a temperature of less than 100 °C, or less than 80 °C in other embodiments, and the crosslinking agent is added.

In certain embodiments, in order to produce a final cross-linkable rubber composition, mixing is continued at a temperature of about 90 to about 110 °C, or about 95 to about 105 °C in other embodiments.

In one or more embodiments, the masterbatch mixing step, or one or more sub-steps of the masterbatch mixing step may be characterized by a peak temperature obtained according to the composition during mixing. This peak temperature is also referred to as a drop temperature.

In one or more embodiments, the peak temperature of the composition during the masterbatch mixing step may be at least 140 °C, at least 150 °C in other embodiments, or at least 160 °C in other embodiments.

In this or other embodiments, the peak temperature of the composition during the masterbatch mixing step may be about 140 to about 200 °C, about 150 to about 190 °C in other embodiments, or about 160 to about 180 °C in other embodiments.

### (Final Mixing Step)

Subsequently to the masterbatch mixing step, the crosslinking agent or a crosslinking agent system is introduced into the composition, and then mixing is continued so as to finally form a cross-linkable substance composition.

This mixing step may be referred to as a final mixing step, a crosslinking mixing step, or a productive mixing step.

A product obtained from this mixing step may be referred to as the cross-linkable rubber composition (or an uncrosslinked rubber composition).

In one or more embodiments, the final mixing step may be characterized by a peak temperature obtained according to the composition during final mixing.

As will be recognized by those skilled in the art, this temperature may also be referred to as a final droplet temperature.

In one or more embodiments, the peak temperature of the composition during the final mixing may be at most 130 °C, at most 110 °C in other embodiments, or at most 100 °C in other embodiments.

In this or other embodiments, the peak temperature of the composition during the final mixing may be about 80 to about 130 °C, about 90 to about 115 °C in other embodiments, or about 95 to about 105 °C in other embodiments.

### (Mixing Device)

All components of the cross-linkable rubber composition may be mixed by a standard mixing device such as an internal mixer (for example, a Banbury mixer, an internal mixer or the like), an extruder, a kneader, and a two-roll mill. Mixing may be performed alone or in a tandem manner.

As suggested above, the components may be mixed in a single step, or in two or more steps in other embodiments.

For example, in a first step including the rubber component and the filler (that is, a mixing step), a masterbatch is typically produced.

Once the masterbatch is prepared, the crosslinking agent may be introduced and mixed into the masterbatch in a final mixing step, which is typically performed at a relatively low temperature in order to reduce the chances of premature crosslinking.

Between the masterbatch mixing step and the final mixing step, an additional mixing step that is sometimes referred to as re-milling may be used.

The cross-linkable rubber composition may be processed into tire components according to a conventional tire manufacturing technique, including standard rubber molding, and molding and curing techniques.

Typically, crosslinking is performed by heating the cross-linkable composition in a mold, and heating may be performed at, for example, about 140 °C to about 180 °C.

The cured or crosslinked rubber composition may also be referred to as crosslinked rubber, and the crosslinked rubber composition generally includes a thermosetting three-dimensional polymer network.

Other components such as the filler and the processing aid may be uniformly dispersed throughout the crosslinked network.

A pneumatic tire may be manufactured as described in U.S. patent numbers 5,866,171, 5,876,527, 5,931,211, and 5,971,046 (which are incorporated herein by reference).

### (Crosslinked Rubber Product)

As above, the cross-linkable rubber composition of the present invention is crosslinked and cured, and becomes a crosslinked rubber product. Examples of the crosslinked rubber product include at least one selected from the group consisting of a tire, an anti-vibration rubber, a seismic isolation rubber, a conveyor belt, a hose, and a crawler.

According to an aspect of the present invention, a crosslinked rubber product as a crosslinked product may contain metal oxide of a relatively low level, such as zinc species, so that advantageous crosslinking characteristics may be obtained.

### [Examples]

Hereinafter, the present embodiment will be described in more detail by Examples, but the present embodiment is not limited to these Examples.

In Examples, a rubber composition and a crosslinked product of the rubber composition were evaluated by the following method.

Unless otherwise specified, all amounts are expressed by parts by mass relative to 100 parts by mass of a rubber component.

### 1. Crosslinking Characteristics

By using each prepared rubber composition, in accordance with JIS K6300-2:2001, at 155 °C, a 10% vulcanization time {tc(10)} (unit: min), a 90% vulcanization time {tc(90)} (unit: min), and a maximum torque (Fmax) (unit: dN ·m) were measured by a curelastometer ("CURELASTO METER 7" manufactured by JSR Corporation).

### 2. Physical Properties After Crosslinking

### (1) 100% elongation tensile stress (unit: MPa)

Slab sheet with thicknesses of 2 mm were produced from each of the prepared rubber compositions, and were crosslinked at 160 °C for 15 min. From each of the obtained crosslinked slab sheet, a dumbbell-shaped type 7 test piece or a ring-shaped test piece (diameter 25 mm, thickness 2 mm) was collected, and was subjected to a tensile test at a room temperature (23 °C) in accordance with JIS K6251:2010, and then a tensile stress (unit: MPa) at 100% elongation was measured.

### [Formation of Eutectic Compound]

A eutectic compound was prepared by mixing 1 mol of choline chloride and 2 mol of urea at 100 °C and forming the eutectic compound, which was cooled to a room temperature (23 °C) under standard conditions (1 atm).

The eutectic compound composed of choline chloride and urea is also referred to as a eutectic solvent or a deep eutectic solvent (DES), and is a liquid at a room temperature (23 °C).

### [Mixing of Eutectic Compound with Zinc Oxide]

Next, the eutectic compound and zinc oxide were mixed in a mixer at a ratio of a mass ratio (0.1 parts by mass of eutectic compound /1.0 parts by mass of zinc oxide), and a mixture of the eutectic compound and zinc oxide was obtained.

### Examples 1 to 2 and Comparative Examples 1 to 4

Rubber compositions having blending compositions provided in Tables 1 and 2 were produced by the following procedure.

On the basis of the blending compositions noted in Tables 1 and 2, a masterbatch of a rubber component, carbon black, a softener, stearic acid, and zinc stearate was obtained by a masterbatch mixing step using a Banbury mixer. The Banbury mixer was operated at 70 RPM (revolutions/min) to perform kneading at a maximum temperature of 160 °C. The maximum temperature means a maximum temperature in the masterbatch immediately after discharging from the Banbury mixer. The masterbatch was cooled to a room temperature (23 °C) after the masterbatch mixing step.

Next, in a re-milling mixing step, the Banbury mixer was operated at 75 RPM (revolutions/min), so that only various masterbatches cooled to the room temperature (23 °C) were kneaded at a maximum temperature of 160 °C, and then were cooled to a room temperature (23 °C).

Next, the Banbury mixer was operated at 40 RPM (revolutions /min), so that the various masterbatches after the re-milling mixing step, a mixture of eutectic compound and zinc oxide, and a peroxide-based crosslinking agent (Table 1), or a peroxide-based crosslinking agent and sulfur (Table 2) were kneaded at a maximum temperature of 100 °C, and then were cooled to a room temperature (23 °C).

1.1 parts by mass of the mixture of the eutectic compound and zinc oxide was blended in Table 1, and 2.2 parts by mass was blended in Table 2.

On six types of obtained rubber compositions, the crosslinking characteristics, the physical properties after crosslinking, and the destruction resistance were evaluated through the methods. The results are noted in Table 1 and Table 2.

**Table 1**

| Unit: parts by mass | | Example | Comparative Example | |
|---|---|---|---|---|
| | | 1 | 1 | 2 |
| Blending composition | Ethylene-propylene copolymer rubber (EPM) * 1 | 90 | 90 | 90 |
| | Butyl chloride rubber *2 | 10 | 10 | 10 |
| | Carbon black *3 | 55 | 55 | 55 |
| | Eutectic compound *4 | 0.1 | 0 | 0 |
| | Stearic acid *5 | 1.5 | 1.5 | 1.5 |
| | Zinc oxide *6 | 1 | 5 | 1 |
| | Peroxide-based crosslinking agent *7 | 3.5 | 3.5 | 3.5 |
| Crosslinking characteristics | Maximum torque {Fmax} (unit: dN • m) | 16.69 | 16.21 | 14.63 |
| | 10% Vulcanization time {tc(10)} (unit: min) | 2.96 | 2.52 | 2.55 |
| | 90% Vulcanization time {tc(90)} (unit: min) | 22.56 | 21.38 | 21.13 |
| Physical property after crosslinking | 100% Elongation tensile stress (unit: MPa) | 3.31 | 3.16 | 2.68 |

**Table 2**

| Unit: parts by mass | | Example | Comparative Example | |
|---|---|---|---|---|
| | | 2 | 3 | 4 |
| Blending composition | Ethylene -propylene - diene terpolymer rubber (EPDM) *8 | 100 | 100 | 100 |
| | Carbon black *3 | 55 | 55 | 55 |
| | Softener *9 | 15 | 15 | 15 |
| | Eutectic compound *4 | 0.2 | 0 | 0 |
| | Zinc stearate *10 | 4 | 4 | 4 |
| | Zinc oxide *6 | 2 | 10 | 2 |
| | Sulfur *11 | 5 | 5 | 5 |
| | Peroxide-based crosslinking agent *7 | 4 | 4 | 4 |
| Crosslinking characteristics | Maximum torque {Fmax} (unit: dN • m) | 20.99 | 19.07 | 17.92 |
| | 10% Vulcanization time {tc(10)} (unit: min) | 2.36 | 2.88 | 2.61 |
| | 90% Vulcanization time {tc(90)} (unit: min) | 25.30 | 25.44 | 25.34 |
| Physical property after crosslinking | 100% Elongation tensile stress (unit: MPa) | 4.511 | 4.077 | 3.822 |

Each of components noted in Table 1 and Table 2 is as follows.
*1: ethylene-propylene copolymer rubber (EPM): manufactured by JSR Corporation, product name "JSR EP11"
*2: butyl chloride rubber: manufactured by JAPAN BUTYL CO., Ltd., product name "JSR CHLOROBUTYL 1066"
*3: carbon black: manufactured by Tokai CARBON Co., Ltd., product name "Seast N"
*4: eutectic compound: as above, a eutectic compound obtained by mixing 1 mol of choline chloride and 2 mol of urea at 100 °C
   choline chloride: manufactured by KANTO KAGAKU Co., Inc., product name "choline chloride"
   urea: manufactured by KANTO KAGAKU Co., Inc., product name "urea"
*5: stearic acid: manufactured by Kao Corporation, product name "LUNAC S-50V"
*6: zinc oxide: manufactured by SAKAI CHEMICAL INDUSTRY CO., LTD., product name "zinc oxide 1 type"
*7: peroxide-based crosslinking agent: manufactured by NOF CORPORATION, product name "PEROXYMON F-40"
*8: ethylene-propylene-diene terpolymer rubber (EPDM): manufactured by JSR Corporation, product name "EP35"
*9: softener: manufactured by Idemitsu Kosan Co., Ltd., product name "Dianaron Process Oil"
*10: manufactured by Asahi Denka Kogyo Co., Ltd., product name "zinc stearate"
*11: sulfur: manufactured by SANSHIN CHEMICAL INDUSTRY CO., LTD., product name "Sanfel EX"

From Tables 1 and 2, it can be found that it is possible to considerably reduce the blending amount of zinc oxide in the presence of the eutectic compound. That is, in the presence of the eutectic compound, it was possible to obtain a rubber composition that may have the same vulcanization characteristics and vulcanized-rubber physical properties as those of a rubber composition in which a large amount of metal oxide is blended.

Even when natural rubber or a diene-based rubber such as synthetic polyisoprene rubber, polybutadiene rubber, or styrene-butadiene copolymer rubber is used for the rubber component, as in Table 1 or Table 2, even in the case where the blending amount of metal oxide is small, it is possible to obtain a rubber composition that may have the same vulcanization characteristics and vulcanized-rubber physical properties as those of a rubber composition in which a large amount of metal oxide is blended.

### Industrial Applicability

As the rubber composition of the present invention, it is possible to obtain a rubber composition having a largely reduced blending amount of metal oxide such as zinc oxide, which may have the same vulcanization characteristics and vulcanized-rubber physical properties as those of a rubber composition in which a large amount of metal oxide is blended, while considering the environment. This is highly suitably used for crosslinked rubber products such as a tire, an anti-vibration rubber, a seismic isolation rubber, a conveyor belt, a hose, and a crawler.

## Claims

1. A rubber composition comprising a rubber component, a eutectic compound, metal oxide, and a peroxide-based crosslinking agent.

2. The rubber composition according to claim 1, wherein the eutectic compound is a mixed product of an onium salt and a hydrogen bond donor.

3. The rubber composition according to claim 2, wherein the onium salt is at least one selected from the group consisting of an ammonium salt, a sulfonium salt, and a phosphonium salt.

4. The rubber composition according to claim 3, wherein the ammonium salt is a quaternary ammonium salt.

5. The rubber composition according to claim 4, wherein the quaternary ammonium salt is choline chloride.

6. The rubber composition according to any one of claims 2 to 5, wherein the hydrogen bond donor is at least one selected from a urea derivative and alkylene glycol.

7. The rubber composition according to claim 6, wherein the urea derivative is urea.

8. The rubber composition according to any one of claims 1 to 7, wherein the metal oxide is zinc oxide.

9. The rubber composition according to claim 8, wherein a content of the zinc oxide is 2 parts by mass or less relative to 100 parts by mass of the rubber component.

10. The rubber composition according to any one of claims 1 to 9, wherein a mass ratio (parts by mass of the metal oxide/ parts by mass of the peroxide-based crosslinking agent) is 0.05 to 0.6.

11. The rubber composition according to any one of claims 1 to 10, wherein the rubber component includes at least one selected from the group consisting of ethylene-propylene copolymer rubber (EPM), ethylene-propylene-diene terpolymer rubber (EPDM), butyl rubber, acrylic rubber, fluoro rubber, chlorosulfonated polyethylene, urethane rubber, halogenated butyl rubber, styrene-butadiene copolymer rubber, styrene-isoprene copolymer rubber, styrene-isoprene-butadiene terpolymer rubber, isoprene-butadiene copolymer rubber, ethylene-propylene-diene terpolymer rubber, natural rubber, synthetic polyisoprene rubber, polybutadiene rubber, isobutylene-isoprene copolymer rubber, and neoprene rubber.

12. The rubber composition according to any one of claims 1 to 11, wherein the rubber component includes at least one selected from the group consisting of ethylene-propylene copolymer rubber (EPM), ethylene-propylene-diene terpolymer rubber (EPDM), butyl rubber, acrylic rubber, fluoro rubber, chlorosulfonated polyethylene, urethane rubber, and halogenated butyl rubber.

13. The rubber composition according to claim 11 or 12, wherein the rubber component includes at least one selected from the group consisting of ethylene-propylene copolymer rubber (EPM) and ethylene-propylene-diene terpolymer rubber (EPDM).

14. A crosslinked rubber product obtained by using the rubber composition according to any one of claims 1 to 13.

15. The crosslinked rubber product according to claim 14, wherein the crosslinked rubber product is at least one selected from the group consisting of a tire, an anti-vibration rubber, a seismic isolation rubber, a conveyor belt, a hose, and a crawler.

16. A method of producing a rubber composition, the method comprising:
(i) a process (A) of producing a masterbatch by kneading a rubber component, a eutectic compound, and metal oxide; and
(ii) a process (B) of producing a rubber composition by kneading the masterbatch, and a peroxide-based crosslinking agent.

17. The rubber composition production method according to claim 16, wherein the eutectic compound is produced by mixing an onium salt and a hydrogen bond donor.

18. The rubber composition production method according to claim 17, wherein the onium salt is at least one selected from the group consisting of an ammonium salt, a sulfonium salt, and a phosphonium salt.

19. The rubber composition production method according to claim 18, wherein the ammonium salt is a quaternary ammonium salt.

20. The rubber composition production method according to claim 19, wherein the quaternary ammonium salt is choline chloride.

21. The rubber composition production method according to any one of claims 17 to 20, wherein the hydrogen bond donor is at least one selected from a urea derivative and alkylene glycol.
